# EUROPÄISCHE PATENTSCHRIFT

(11) **EP 0 824 694 B1**
(45) Veröffentlichungstag und Bekanntmachung des Hinweises auf die Patenterteilung: **09.07.2008**
(21) Anmeldenummer: 96945740.7
(22) Anmeldetag: 20.11.1996
(51) Int. Cl.: G01N 27/407

(54) **GASSENSOR**
GAS SENSOR
DETECTEUR DE GAZ

(30) Priorität: 06.03.1996 DE 19608544
(43) Veröffentlichungstag der Anmeldung: 25.02.1998
(73) Patentinhaber: ROBERT BOSCH GMBH, 70442 Stuttgart (DE)
(72) Erfinder: GRASER, Theodor, D-70191 Stuttgart (DE); HOETZEL, Gerhard, D-70376 Stuttgart (DE); WEHRMANN, Johann, D-70184 Stuttgart (DE); EISENSCHMID, Heinz, D-70499 Stuttgart (DE)
(86) Internationale Anmeldenummer: PCT/DE1996/002210
(87) Internationale Veröffentlichungsnummer: WO 1997/033165

(56) Entgegenhaltungen:
- EP-A- 0 326 399
- DE-U- 9 014 826
- FR-A- 2 479 471
- US-A- 4 597 850
- US-A- 4 683 049

## Beschreibung

### Stand der Technik

Die Erfindung geht aus von einem Gassensor, insbesondere zur Bestimmung des Sauerstoffgehaltes in Abgasen von Verbrennungsmotoren, nach dem Oberbegriff der unabhängigen Ansprüche.

Aus der US-PS 4 597 850 ist ein Gassensor mit einem Sensorelement bekannt, bei dem das Sensorelement am abgasseitigen Ende von einem doppelwandigen Schutzrohr mit einem äußeren Zylinderteil und einem inneren Zylinderteil umgeben ist. In der Mantelfläche des äußeren Zylinderteils und am oberen Ende des inneren Zylinderteils sind jeweils Gasöffnungen angeordnet, so daß das Abgas zwischen den Wänden der Zylinderteile eine Umlenkung erfährt. Dadurch wird gewährleistet, daß das Abgas nicht geradlinig auf den sensitiven Abschnitt des Sensorelements strömt. Bei einer direkten Anströmung des Sensorelements mit Abgas können nämlich die im Abgas mitgeführten Partikel, wie beispielsweise Verunreinigungen oder Kondenswasser, den sensitiven Abschnitt des Sensorelements beschädigen.

Das Gebrauchsmuster DE-9014826 offenbart einen Gassensor mit zwei Schutzrohren, wobei das innere Schutzrohr über die Stirnseite des äußeren Schutzrohres hinausragt.

### Vorteile der Erfindung

Der erfindungsgemäße Meßfühler mit den kennzeichnenden Merkmalen des Hauptanspruchs hat demgegenüber den Vorteil, daß das Schutzrohr fertigungstechnisch und montagetechnich einfach aufgebaut ist. Die Erfindung bewirkt, daß die im Abgas von Verbrennungsmotoren mitgeführten Partikel, wie beispielsweise Verunreinigungen oder Kondenswasser, am Eindringen in den Zwischenraum zwischen äußerer und innerer Schutzhülse gehindert werden. Das Abgas wird wegen der stirnseitigen Öffnung in der äußeren Schützhülse beim Gaseintritt zusätzlich umgelenkt. Die Erfindung gemäß dem Unteranspruch 7 hat den Vorteil, daß bei einem kleinen zur Verfügung stehenden Innendurchmesser der äußeren Schutzhülse das Sensorelement in der inneren Schutzhülse nach allen Seiten einen ausreichenden Sicherheitsabstand zur Innenwand der inneren Schutzhülse hat. Dieser Sicherheitsabstand ist notwendig, weil das Sensorelement bei stoßartiger Belastung in der inneren Schutzhülse elastisch ausgelenkt wird und beim Anstoßen an die Innenwand beschädigt würde beziehungsweise zu Bruch gehen kann.

Durch die in den Unteransprüchen aufgeführten Maßnahmen sind vorteilhafte Weiterbildungen und Verbesserungen der in den Hauptansprüchen angegebenen Meßfühler möglich. Besonders vorteilhaft ist es, als Gaseinlaß- und/oder Gasauslaßöffnung den Spalt zwischen äußerer Schutzhülse und innerer Schutzhülse zu nutzen. Dadurch sind keine zusätzlichen Fertigungsschritte zum Herstellen der Gaseinlaß- und/oder Gasauslaßöffnungen in der äußeren Schutzhülse notwendig. Die Anordnung der Gaseinlaßöffnungen am Flansch der inneren Schutzhülse bewirkt, daß das im Abgas mitgeführte Kondenswasser nicht unmittelbar an den sensitiven Bereich des Sensorelements gelangt. Die Ausbildung der Gasöffnungen mit aufgestellten, schildartigen Wandabschnitten unterstützt diese Wirkung. Eine besonders zweckmäßige Ausführung liegt vor, wenn die Erfindungen der unabhängigen Ansprüche in Kombination eingesetzt werden.

### Zeichnung

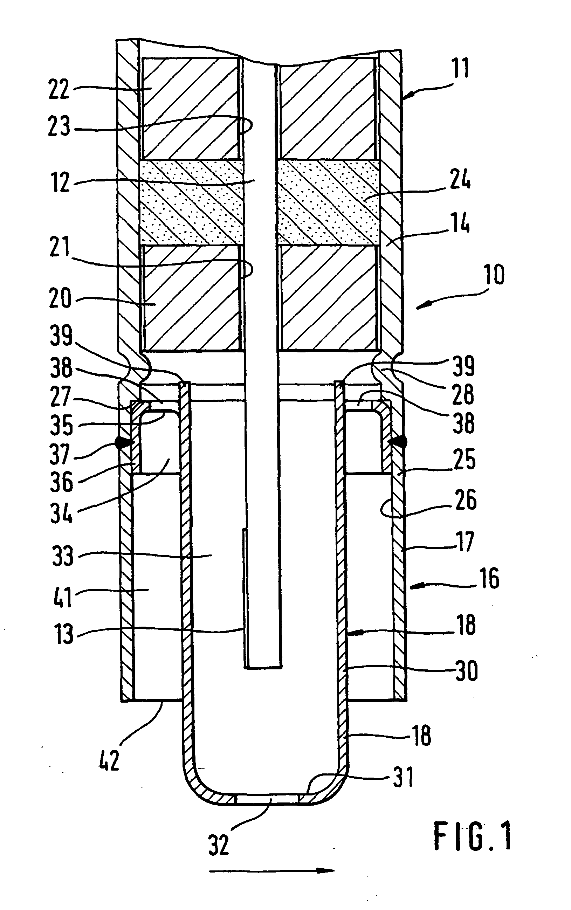

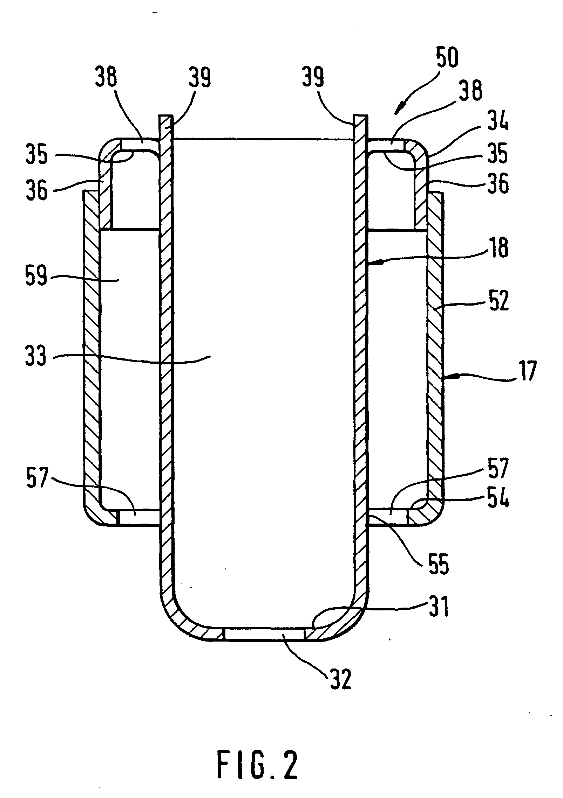

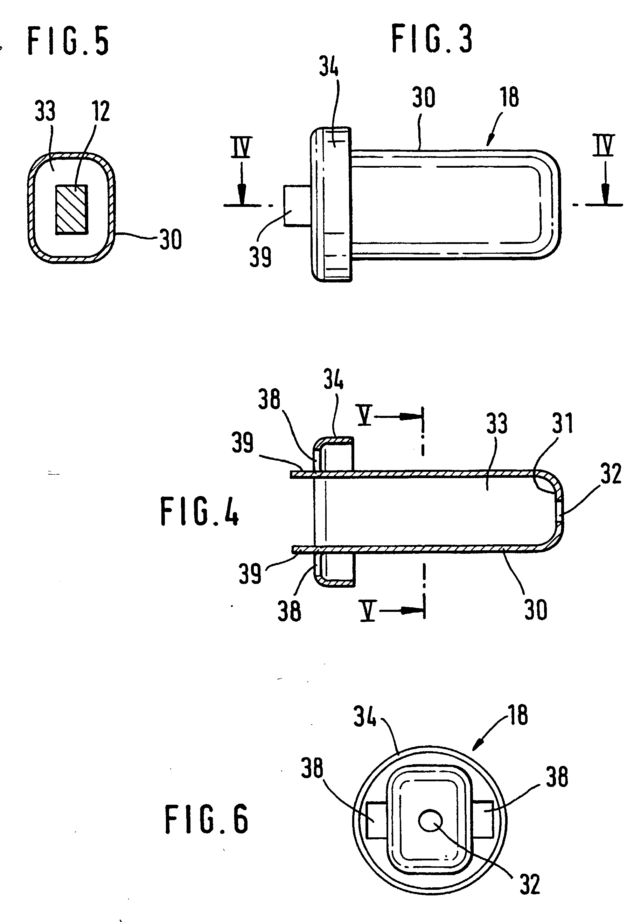

Ein Ausführungsbeispiel der Erfindung ist in der Zeichnung dargestellt und in der nachfolgenden Beschreibung näher erläutert. Es zeigen Figur 1 ein erstes Ausführungsbeispiel eines abgasseitigen Teil eines Meßfühlers im Querschnitt, Figur 2 einen Querschnitt eines doppelwandigen Schutzrohres als zweites Ausführungsbeispiel des erfindungsgemäßen Gassensors, Figur 3 eine Ansicht der Längsseite einer inneren Schutzhülse, Figur 4 einen Schnitt durch die innere Schutzhülse nach der Linie IV-IV gemäß Figur 3, Figur 5 einen Schnitt durch die innere Schutzhülse nach der Linie V-V gemäß Figur 4 und Figur 6 eine Draufsicht mit Blickrichtung auf den äußeren Boden der inneren Schutzhülse.

### Ausführungsbeispiele

Figur 1 zeigt ein erstes Ausführungsbeispiel eines abgasseitigen Abschnitts 10 eines Meßfühlers, beispielsweise eines elektrochemischen Sauerstoffsensors, mit in einem metallischen Gehäuse 11 gasdicht fixierten planaren Sensorelement 12. Das Gehäuse 11 wird abgasseitig von einem zylinderförmigen Gehäuseabschnitt 14 gebildet.

Das Sensorelement 12 besteht aus einer sauerstoffionenleitenden Festelektrolytkeramik mit nicht dargestellten Elektroden. Mindestens eine Elektrode ist dem Abgas ausgesetzt und bildet am Sensorelement 12 einen sensitiven Bereich 13. Das planare Sensorelement 12 ist aus mehreren keramischen Folien zusammenlaminiert, gesintert und weist im gesinterten Zustand einen rechteckigen Querschnitt auf. Der sensitive Bereich 13 des Sensorelements 12 ist von einem doppelwandigen Schutzrohr 16 umgeben. Das Schutzrohr 16 hat eine äußere Schutzhülse 17 und eine innere Schutzhülse 18.

Die äußere Schutzhülse 17 wird gemäß dem ersten Ausführungsbeispiel von einer einstückig mit dem Gehäuseabschnitt 14 verbundenen zylindrischen Hülse 25 gebildet. Die zylindrische Hülse 25 reicht in Längserstreckung über das Sensorelement 12 hinaus und hat eine zylindrische Innenwand 26.

Eine nähere Darstellung der inneren Schutzhülse 18 geht aus den Figuren 3 bis 6 hervor. Die innere Schutzhülse 18 hat eine Wand 30 mit einem am abgasseitigen Ende ausgebildeten Boden 31. Am anderen Ende ist aus der Wand 30 ein Flasch 34 geformt. Die Wand 30 umgibt einen Meßgasraum 33, in den der sensitive Abschnitt 13 des Sensorelements 12 eintaucht (Figur 1). Im Boden 31 ist bezüglich der Mittellinie fluchtend eine Öffnung 32 zum Gasein- beziehungsweise Gasaustritt angeordnet. Der Flansch 34 hat einen beispielsweise rechtwinklig zur Wand 30 verlaufenden Verbindungsabschnitt 35 und einen sich daran anschließenden, parallel zur Wand 30 verlaufenden und zum Boden 31 weisenden Befestigungsabschnitt 36. Der Befestigungsabschnitt 36 liegt an der Zylinderwand 26 der Hülse 25 an und ist dort beispielsweise mittels einer umlaufenden Laser-Schweißnaht oder mittels mehrerer Laser-Schweißpunkte befestigt. Zwischen der Zylinderwand 26 der Hülse 25 und der inneren Schutzhülse 18 ist ein umlaufender Zwischenraum 41 vorhanden, der mit einem radial umlaufenden Spalt 42 zum Abgas hin geöffnet ist (Figur 1).

Der von der inneren Schutzhülse 18 umgebene Meßgasraum 33 hat gemäß Figur 5 einen rechteckförmigen Querschnitt entsprechend dem rechteckigen Querschnitt des Sensorelements 12. Durch die Anpassung des Querschnitts des Meßgasraums 33 an den Querschnitt des Sensorelements 12 haben die vier Seitenflächen des Sensorelements 12 zumindest annähernd den gleichen Abstand zur benachbarten Wand 30 der inneren Schutzhülse 18. Bei einem kreisrunden Querschitt des Meßgasraums 33 würden die vier Kanten näher an die Wand 30 der inneren Schutzhülse 18 reichen als die vier Seitenflächen des Sensorelements 12. Eine ausreichende Dimensionierung des kreisrunden Querschnitts des Meßgasraums 33 ist jedoch nicht möglich, wenn kein ausreichder Bauraum durch die äußere Schutzhülse 17 vorgegeben ist. Zwischen der äußerern Schutzhülse 17 und der inneren Schutzhülse 18 muß außerdem der Zwischenraum 41 zum Durchströmen des Abgases ausreichend dimensioniert sein.

Der Gehäuseabschnitt 14 ist an einer Stelle mit einer radial einwärts vorstehenden Einformung 28 ausgeführt. Mit der Einformung 28 wird ein erstes keramisches Formteil 20 mit einer ersten zentralen Durchführung 21, ein zweites keramisches Formteil 22 mit einer zweiten zentralen Durchführung 23 und ein dazwischen angeordnetes, vorgepreßtes Dichtelement 24 aus Steatitpuver mit einer auf das Dichtelement 24 einwirkenden Anpreßkraft gehalten. Die beiden Formteile 20, 22 bestehen beispielsweise aus Al₂O₃. Durch die Anpreßkraft wird das Statitpulver des Dichtelements 24 an das Sensorelement 12 und an die Innenwand des Gehäuseabschnitts 14 gedrückt, wodurch das Sensorelement 12 gasdicht im Gehäuseabschnitt 14 gehalten wird. Auf den anschlußseitigen Teil des Meßfühlers mit der Kontaktierung des Sensorelements 12 und mit dem Ausgang der Anschlußkabel wird nicht näher eingengangen. Verschiedene Ausführungen für den anschlußseitigen Teil von Gassensoren sind hinlänglich bekannt.

In dem nicht dargestellten Abgasrohr strömt das Abgas in der mit einem Pfeil in Figur 1 angedeuteten Richtung, wobei das Abgas über den Spalt 42 in den Zwischenraum 41 eindringt und durch die Öffnungen 38 in den Meßgasraum 33 gelangt. Durch die Öffnung 32 strömt das Abgas schließlich aus dem Meßgasraum 33 heraus. Es ist jedoch nicht ausgeschlossen, daß das Abgas auch durch die Öffnung 32 in den Meßgasraum 33 hineinströmt, wobei sich dann die Strömung im Meßgasraum 33 und im Zwischenraum 41 umkehrt.

Zur Erleichterung der Montage der inneren Schutzhülse 18 weist die zylindrische Innenwand 26 der Hülse 25 beispielsweise eine Ringfläche 27 auf, gegen die die Schutzhülse 18 mit dem Flansch 34 anschlägt. Damit erhält die Schutzhülse 18 eine definierte axiale Lage in der zylindrischen Hülse 25.

Die Öffnungen 38 werden vorteilhaft dadurch hergestellt, daß aus dem Material der Wand 30 beispielsweise zwei schildartige Wandabschitte 39 herausgefaltet werden, die beispielsweise parallel zum Sensorelement 12 verlaufen und dabei die Wand 30 verlängern. Die Ausbildung der Öffnungen 38 mit den Wandabschnitten 39 bieten den Vorteil, daß das beim Gaseintritt möglicherweise in den Zwischenraum 41 gelangende Kondenswasser in Richtung des Formteils 20 gelenkt wird. Beim Auftreffen auf das erwärmte Formteil 20 verdampft das Kondenswasser und kann somit keinen Schaden an der Keramik des Sensorelements 12 ausrichten.

Ein zweites Ausführungsbeispiel geht aus Figur 2 hervor, bei dem ein doppelwandiges Schutzrohr 50 mit einer äußeren Hülse 52, die die äußere Schutzhülse 17 bildet, vorgesehen ist. In die Hülse 52 ist die innere Schutzhülse 18 des ersten Ausführungsbeispiels eingesetzt. Die Hülse 52 hat einen Boden 54 in dem eine zentrale Öffnung 55 eingebracht ist, durch die die innere Schutzhülse 18 ragt. Neben der zentralen Öffnung 55 sind in dem Boden 54 weitere Öffnungen 57 angeordnet, die gemäß dem Spalt 42 im ersten Ausführungsbeispiel zum Gasein- und/oder Gasaustritt in einen zwischen der Hülse 52 und der inneren Schutzhülse 18 ausgebildeten Zwischenraum 59 dienen. Es ist aber auch denkbar, die zentrale Öffnung 55 so zu dimensionieren, daß zwischen innerer Schutzhülse 18 und dem stirnseitigen Ende der Hülse 52 ein Spalt für den Gasein- und/oder Gasaustritt vorhanden ist.

Im Unterschied zum ersten Ausführungsbeispiel ist die die äußere Schutzhülse 17 bildende Hülse 52 nicht einstückig mit dem Gehäuseabschnitt 14 verbunden, sondern ein vom Gehäuseabschnitt 14 getrenntes Einzelteil. Andererseits entspricht der Gassensor gemäß dem zweiten Ausführungsbeispiel bezüglich des gehäuseseitigen Aufbaus dem Gassensor des ersten Ausführungsbeispiels. Der Gehäuseabschnitt 14 endet jedoch beim Gassensor des zweiten Ausführungsbeispiels an der Stelle der Schweißnaht 37 des ersten Ausführungsbeispiels.

Zur besseren Montage des Schutzrohres 50 mit dem Gehäuse 11 bzw. dem Gehäuseabschnitt 14 ist die Hülse 52 einem Innendurchmesser ausgeführt, der dem Innendurchmesser des Gehäuseabschnitts 14 entspricht. Gleichzeitig ragt der Flansch 34 der inneren Schutzhülse 18 über das obere Ende der Hülse 52 hinaus. Mit diesem vorstehenden Abschnitt des Flansches 34 wird das vormontierte Schutzrohr 50 in die abgasseitige Öffnung des Gehäuseabschnitts 14 eingesetzt. An dem Stoß, an dem sich die Hülse 52 und der Gehäuseabschnitt 14 berühren, wird dann, beispielsweise mittels einer umlaufenden Laser-Schweißnaht oder mittels Laser-Schweißpunkte, das Schutzrohr 50 mit dem Gehäuseabschnitt 14 verbunden. Bei diesem Schweißvorgang wird die vorher lediglich mittels einer Preß- oder Quetschverbindung in der Hülse 52 fixierte innere Schutzhülse 18 mit verschweißt.

## Patentansprüche

1. Gassensor mit einem Sensorelement, welches in einem Gehäuse fixiert ist, und mit einem doppelwandigen Schutzrohr mit einer äußeren Schutzhülse und einer inneren Schutzhülse, die jeweils Öffnungen zum Gasein- und/oder Gasaustritt aufweisen, wobei die innere Schutzhülse einen Gasraum bildet, in den das Sensorelement mit einem messgasseitigen Abschnitt hineinragt, und wobei zwischen den Mantelflächen der äußeren und der inneren Schutzhülse ein Zwischenraum zur Weiterleitung des Gases in den Gasraum ausgebildet ist, und die innere Schutzhülse (18) über die Stirnseite der äußeren Schutzhülse (25,52) hinausragt, **dadurch gekennzeichnet, dass** die äußere Schutzhülse (17) eine Hülse (25, 52) mit einer geschlossenen Mantelfläche ist und dass mindestens eine Öffnung (42, 57) zum Gasein- und/oder Gasaustritt in den Zwischenraum (41, 59) an der Stirnseite der Hülse (25, 52) angeordnet ist.

2. Gassensor nach Anspruch 1, **dadurch gekennzeichnet, daß** die innere Schutzhülse (18) einen Flansch (34) aufweist, dessen Außendurchmesser dem Innendurchmesser der Hülse (25, 52) angepaßt ist, und daß die innere Schutzhülse (18) mit dem Flansch (34) an der Innenwand der Hülse (25, 52) befestigt ist.

3. Gassensor nach Anspruch 2, **dadurch gekennzeichnet, daß** der Flansch (34) über einen Verbindungsabschnitt (35) verfügt, der die innere Schutzhülse (18) mit der Hülse (52, 52) verbindet, und daß im Verbindungsabschnitt (35) Öffnungen (38) zum Gasein- und/oder Gasaustritt in den Gasraum (33, 59) angeordnet sind.

4. Gassensor nach Anspruch 3, **dadurch gekennzeichnet, daß** die Öffnungen (38) im Bereich des Flansches (34) schildförmige Wandabschnitte (39) aufweisen, die aus dem Wandmaterial der inneren Schutzhülse (18) geformt sind und das Sensorelement (12) zur Öffnung (38) hin abschirmen.

5. Gassensor nach Anspruch 2, **dadurch gekennzeichnet, daß** die innere Schutzhülse (18) einen Boden (31) aufweist, in dem mindestens eine weitere Öffnung (32) zum Gasein- und/oder Gasaustritt angeordnet ist.

6. Gassensor nach Anspruch 1, **dadurch gekennzeichnet, daß** die Öffnung (42) als ein zwischen der Hülse (25) und der Außenwand der inneren Schutzhülle (18) ausgebildeter radial umlaufenden Spalt (42) ausgebildet ist.

7. Gassensor nach Anspruch 1, **dadurch gekennzeichnet, daß** der Gasraum (33) quer zur Erstreckungsrichtung des Sensorelements (12) einen an den Querschnitt des Sensorelements (12) angepaßten Querschnitt aufweist.

8. Gassensor nach Anspruch 7, **dadurch gekennzeichnet, daß** der Querschnitt des Gasraums (33) rechteckförmig ist und daß der Abstand zwischen der Innenwand der inneren Schutzhülse (18) und dem Sensorelement (12) im Querschnitt zumindest annähernd gleichmäßig ist.

9. Gassensor nach einem der vorhergeneden Ansprüche, **dadurch gekennzeichnet, daß** die Hülse (25) einstückig vom Gehäuse (11) oder von einem Gehäuseabschnitt (14) gebildet ist.

10. Gassensor nach einem der vorhergehenden Ansprüche, **dadurch gekennzeichnet, daß** die Hülse (52) mit der inneren Schutzhülse (18) ein vormontiertes, doppelwandiges Schutzrohr (50) bildet, das an eine abgasseitige Stirnfläche des Gehäuses (11) oder eines Gehäuseabschnitts (14) angesetzbar ist.

## Claims

1. Gas sensor having a sensor element which is fixed in a housing, and having a double-walled protective tube with an outer protective sleeve and an inner protective sleeve, which each have openings for a gas inlet and/or gas outlet, with the inner protective sleeve forming a gas area into which the sensor element projects with a section on the measurement gas side, and with an intermediate space for the gas to be passed into the gas area being formed between the casing surfaces of the outer and the inner protective sleeves, and with the inner protective sleeve (18) projecting beyond the end face of the outer protective sleeve (25, 52, **characterized in that** the outer protective sleeve (17) is a sleeve (25, 52) with a closed casing surface, and **in that** at least one opening (42, 57) is arranged on the end face of the sleeve (25, 52) for the gas inlet and/or gas outlet into and/or out of the intermediate space (41, 59).

2. Gas sensor according to Claim 1, **characterized in that** the inner protective sleeve (18) has a flange (34) whose external diameter is matched to the internal diameter of the sleeve (25, 52), and **in that** the inner protective sleeve (18) is attached by means of the flange (34) to the inner wall of the sleeve (25, 52).

3. Gas sensor according to Claim 2, **characterized in that** the flange (34) has a connection section (35) which connects the inner protective sleeve (18) to the sleeve (52, 52) and **in that** openings (38) for the gas inlet and/or gas outlet into and/or out of the gas area (33, 59) are arranged in the connection section (35).

4. Gas sensor according to Claim 3, **characterized in that** the openings (38) have wall sections (39) in the area of the flange (34), which wall sections (39) are in the form of shields, are formed from the wall material of the inner protective sleeve (18) and shield the sensor element (12) towards the opening (38).

5. Gas sensor according to Claim 2, **characterized in that** the inner protective sleeve (18) has a base (31) in which at least one further opening (32) is arranged for the gas inlet and/or gas outlet.

6. Gas sensor according to Claim 1, **characterized in that** the opening (42) is in the form of a radially circumferential gap (42) formed between the sleeve (25) and the outer wall of the inner protective sleeve (18).

7. Gas sensor according to Claim 1, **characterized in that,** transversely with respect to the extent direction of the sensor element (12), the gas area (33) has a cross section which is matched to the cross section of the sensor element (12).

8. Gas sensor according to Claim 7, **characterized in that** the cross section of the gas area (33) is rectangular, and **in that** the distance between the inner wall of the inner protective sleeve (18) and the sensor element (12) has an at least approximately uniform cross section.

9. Gas sensor according to one of the preceding claims, **characterized in that** the sleeve (25) is formed integrally by the housing (11) or by a housing section (14).

10. Gas sensor according to one of the preceding claims, **characterized in that** the sleeve (52), together with the inner protective sleeve (18), forms a prefabricated, double-walled protective tube (50) which can be fitted to an end surface on the output gas side of the housing (11) or of a housing section (14).

## Revendications

1. Détecteur de gaz comportant un élément de détecteur fixé dans un boîtier ainsi qu'un tube de protection à double paroi ayant un manchon protecteur extérieur et un manchon protecteur intérieur ayant chacun un orifice d'entrée de gaz et/ ou de sortie de gaz,
le manchon protecteur intérieur formant un volume de gaz dans lequel pénètre l'élément de capteur avec un segment du côté où se fait la mesure du gaz et
entre les surfaces-enveloppes du manchon protecteur extérieur et du manchon protecteur intérieur, on a un volume intermédiaire pour transférer le gaz dans le volume de gaz, et le manchon protecteur intérieur (18) dépasse de la face frontale du manchon protecteur extérieur (25, 52),
**caractérisé en ce que**
le manchon protecteur extérieur (17) est un manchon (25, 52) ayant une surface-enveloppe fermée et
au moins une ouverture (42, 57) pour l'entrée du gaz et/ ou la sortie du gaz dans le volume intérieur (41, 59) au niveau de la face frontale des manchons (25, 52).

2. Détecteur de gaz selon la revendication 1,
**caractérisé en ce que**
le manchon protecteur intérieur (18) comporte une bride (34) dont le diamètre extérieur est adapté au diamètre intérieur du manchon (25, 52) et
le manchon protecteur intérieur (18) est fixé avec une bride (34) à la paroi intérieure du manchon extérieur (25, 52).

3. Détecteur de gaz selon la revendication 2,
**caractérisé en ce que**
la bride (34) comporte un segment de liaison (35) reliant le manchon protecteur intérieur (18) au manchon extérieur (25, 52) et
le segment de liaison (35) comporte des ouverture (38) pour l'entrée du gaz et/ou la sortie du gaz dans le volume de gaz (33, 59).

4. Détecteur de gaz selon la revendication 3,
**caractérisé en ce que**
les ouvertures (38) présentent des segments de paroi (39) en forme d'écrans au niveau de la bride (34), segments réalisés dans la matière de la paroi du manchon protecteur intérieur (18) et qui protègent l'élément de capteur (12) par rapport à l'ouverture (38).

5. Détecteur de gaz selon la revendication 2,
**caractérisé en ce que**
le manchon protecteur intérieur (18) comporte un fond (31) dans lequel il y a au moins un autre orifice (32) pour l'entrée du gaz et/ ou la sortie du gaz.

6. Détecteur de gaz selon la revendication 1,
**caractérisé en ce que**
l'ouverture (42) est réalisée sous la forme d'un intervalle périphérique (42), radial, entre le manchon (25) et la paroi extérieure du manchon protecteur intérieur (18).

7. Détecteur de gaz selon la revendication 1,
**caractérisé en ce que**
le volume de gaz (33) présente transversalement à la direction d'extension de l'élément de détecteur (12), une section adaptée à la section de l'élément détecteur (12).

8. Détecteur de gaz selon la revendication 7,
**caractérisé en ce que**
la section du volume de gaz (33) est de forme rectangulaire et la distance entre la paroi intérieure du manchon protecteur intérieur (18) et l'élément de capteur (12) est au moins sensiblement régulière.

9. Détecteur de gaz selon l'une des revendications précédentes,
**caractérisé en ce que**
le manchon (25) est réalisé en une seule pièce avec le boîtier (11) ou un segment de boîtier (14).

10. Détecteur de gaz selon l'une des revendications précédentes,
**caractérisé en ce que**
le manchon (52) forme avec le manchon protecteur intérieur (18), un tube protecteur (50) à double paroi, préassemblé, dont la surface frontale du boîtier (11) ou du segment de boîtier (14) se situe du côté des gaz d'échappement.
